# EUROPEAN PATENT SPECIFICATION

(11) **EP 0 313 278 B1**
(45) Date of publication and mention of the grant of the patent: **14.12.1994**
(21) Application number: 88309656.2
(22) Date of filing: 14.10.1988
(51) Int. Cl.: H04N 5/217

(54) **Defect compensation for solid state cameras**
Defektkompensation für Festkörperkameras
Compensation de défectuosités pour caméras à l'état solide

(30) Priority: 17.10.1987 JP 261972/87
(43) Date of publication of application: 26.04.1989
(73) Proprietor: SONY CORPORATION, Tokyo 141 (JP)
(72) Inventor: Itakura, Hiroyuki c/o Patents Division, Shinagawa-ku Tokyo 141 (JP); Asaida, Takashi c/o Patents Division, Shinagawa-ku Tokyo 141 (JP)
(74) Representative: Cotter, Ivan John

(56) References cited:
- EP-A- 0 140 266
- GB-A- 2 181 020
- US-A- 4 167 754
- US-A- 4 600 946

## Description

This invention relates to solid state image pickup apparatus or solid-state television cameras.

In general, in a solid state image pickup apparatus provided with an image pickup unit composed of a solid state image pickup device or devices, an image pickup output is obtained at the solid state image pickup device in a field readout mode, in which signal charges are read out from the totality of the picture elements or pixels during one field period, or in a frame readout mode, in which the signal charges are read out from the totality of the pixels during one frame period. Also, an electronic shutter function provided by controlling the effective charge accumulation time of the solid state image pickup device is added or incorporated in place of a mechanical shutter system. The image pickup unit of a solid state colour image pickup apparatus for picking up a colour image is so designed that the image pickup is performed by three solid state image pickup devices, in such a manner that colour video signals are formed by image pickup outputs of images of a scene in three primary colours formed by picked up image light which has been colour-separated into three primary colours, namely red (R), green (G) and blue (B).

A so-called space pixel shifting system has been proposed as a means for increasing the resolution in the horizontal direction in the solid-state colour image pickup apparatus for imaging a scene or an object for each of the colour components obtained upon colour separation of the image light. According to the space pixel shifting system, a solid-state image pickup device, for example the solid-state image pickup device for imaging the green (G) colour component of a scene, is arranged at a position shifted by one half of a pixel pitch in the horizontal direction with respect to the solid-state image pickup devices for imaging the red (R) and blue (B) colour components of the scene.

In solid-state image pickup devices formed by semiconductors, such as charge coupled devices (CCDs), defective pixels are inevitably produced in which, due to local crystal defects of the semiconductor, a constant bias voltage is added to the image pickup output, which is proportional to the amount of incident light, with the result that the picture quality is degraded by the image pickup output from the defective pixel. The image defect consisting of a constant bias voltage being perpetually added to the image pickup output is referred to as a "white flaw defect", since the image defect signal, if processed directly, will appear as bright spots on the surface of a monitor screen.

For compensating for the deterioration in picture quality produced by the image pickup output from defective pixels included in the solid-state image pickup device, it has been proposed to store in a memory information indicating the presence or absence of a defect in each pixel of the solid-state image pickup device and to make use of the imaging output from a pixel adjacent to the defective pixel, in place of the imaging output from the defective pixel, for interpolation on the basis of the information stored in the memory.

Should the possible presence of a defect in the solid-state image pickup device be stored for each pixel in the memory, it becomes necessary to employ a memory having a voluminous capacity corresponding to the total number of pixels of the image pickup device. In view of this, it has been proposed in our Japanese Patent Publication (KOKOKU) No. 34872/1985 to encode and store the distance between defective pixels in the memory, as data indicating the position of the defective pixels in the solid-state image pickup device, thereby to reduce the overall memory capacity.

Although the memory capacity can be reduced by encoding and storing the distance between defective pixels, the memory is in perpetual operation, resulting in an increase in wasteful power consumption and an increase in the power consumption of the image pickup apparatus as a whole.

In addition, the above-described interpolating compensation technique leads to increased compensation error should there be no correlation in the image pickup output obtained at the pixel lying close to the defective pixel. In view of this, it has also been proposed to store data concerning the position of defective pixels included in the solid state device and the levels of the defective components in the output signal in a memory and to form defect compensation signals at the timing of output signals of the defective pixels contained in the output signal from the solid state device, which defect compensation signals are added to the output signal of the device for realising the compensation for defects: see Japanese Patent Application Publication (KOKAI) No. 51378/1985.

It is to be noted that, in the previously proposed solid state imaging or image pickup apparatus, defect compensation is carried out only for image defects caused by white flaw image defects having a high defect level.

It is further to be noted that, in solid state imaging devices formed by semiconductors, the signal level due to spurious signal charges and ascribable to dark current is high and an image defect caused by a white flaw image defect presents itself rather conspicuously or acutely. However, observation of the image defect with suppression of the dark current to a lower value has revealed that, besides the white flaw image defect already known to have temperature dependency, a black flaw image defect which is free from temperature dependency, but in which predetermined bias charges are subtracted from the image pickup output which is proportional to the amount of incident light, and white and black flaw image defects free from temperature dependency but having an incident light amount dependency, will appear as image defects in the image output.

An image defect caused by a white flaw defective pixel appears rather conspicuous, but at an extremely low level at ambient temperature, so that it may be safely disregarded as a defect. However, the image defect increases exponentially with a rise in temperature. For compensating for the white flaw defect having temperature dependency, the compensation signal needs to be compensated further for temperature. However, should there be any compensation error in the temperature compensating circuit, the white flaw defect may be over-compensated or under-compensated such that so-called compensation flaws remain in the compensated image pickup output.

In a solid state imaging apparatus provided with the electronic shutter function, the charge accumulation time of the solid state imaging device of the image pickup unit is variably controlled by the preset speed of the electronic shutter, with the result that the defect level due to a defective pixel included in the image pickup output from the defective pixel is changed. The defect level is also changed by switching of the readout modes of the signal charges. In the case of switching the readout modes for the signal charges from the solid-state imaging device, should the charge accumulation time be set to 1/2 in, for example, the field readout mode, the signal charges produced are equal to one half those for the normal mode. However, for the frame readout mode, the effective charge accumulation time is one quarter of the normal accumulation time. Even when the shutter speed is set to the same value, the effective charge accumulation time will differ depending on the readout mode for the signal charges, so that the signal level of the white flaw defect signal included in the image pickup output will also differ, with the result that, when the charge accumulation time for the solid state imaging device is changed, an error is caused in the white flaw defect compensation and a so-called compensation flaw remains in the image pickup output which has been compensated for defects.

When the data concerning the positions of the defective pixels included in the solid-state image pickup device are stored in the memory and the compensation for defects effected on the basis of data read out from the memory, compensation for defects can be made very satisfactorily without concomitant compensation errors. However, the volume of the data is undesirably increased since the data concerning the location of the defective pixels and the level of the defective components included in the output signal needs to be stored in the memory. Above all, when the location of each of the defective pixels is indicated by an absolute address, the number of bits used as position data for each defective pixel is increased when employing a solid state image pickup device having an increased number of pixels to increase the high image resolution, so that the memory capacity needs to be correspondingly increased.

When the data concerning the position of the defective pixels included in the solid state image pickup device and the level of the defective component contained in the output signal are stored in the memory, and a defect compensation signal is formed at the timing of the output signals of the defective pixels, so as to be then added to the output signal of the solid state image pickup device for defect compensation, should the position of the defect compensation signal deviate with respect to the output signal of the solid state image pickup device, so-called compensation flaws are caused to take place due to a defective compensating operation, thereby causing deterioration of the quality of the image pickup output signal. In addition, should it be intended to compensate for the defects in such a manner as to take the above-described changes in the various defect levels into account, it is necessary to carry out an extremely complex processing operation. Above all, in the solid state image pickup apparatus having an image pickup unit constructed in accordance with the spatial pixel shifting system, it is necessary to form defect compensating signals in phase with the image pickup outputs obtained at the first to third solid state image pickup devices.

UK Patent Application Publication No. GB-A-2 181 020 discloses a solid state television camera comprising:
solid state image sensor means of semiconductor material for providing an output signal corresponding to an image of an object, the image sensor means including picture elements arranged in a raster having parallel scanning lines which are, in turn, arranged in order in a direction orthogonal to the direction of said scanning lines, said semiconductor material having crystal defects at locations of a plurality of said picture elements which will create noise at corresponding times in said output signal;
memory means for memorising position data corresponding to the positions of said crystal defects in the semiconductor material and defect level data corresponding to the level of a compensating signal for compensating the output signal associated with each of said defect locations;
readout means for reading out said position data and said defect level data from the memory means;
temperature sensing means for sensing the temperature around the solid state image sensor means;
compensating signal generating means connected to be supplied with said position data and defect level data and operative to generate the compensating signal at the timing at which said crystal defect is scanned and having a level which is determined by temperature compensated defect level data compensated by the output of the temperature sensing means; and
control means responsive to said compensating signal for cancelling said noise from said output signal of the image sensor means.

According to the present invention there is provided a solid state television camera as just set forth, characterised in that:
said memory means are adopted to store defect level data which have been measured at a higher temperature than a normal operating temperature;
image sensor means are adapted to variably set the charge accumulation time in each of its picture elements; and
the compensating signal generating means is operative to form signal level defect compensating signals in association with a preset charge accumulating time on the basis of data read out from the memory means and to effect defect compensation of output signals from the solid state image sensor means by defect compensating signals, the signal level of which is controlled in dependence upon the charge accumulation time in each picture element of the image sensor means.

Thus, not only is deterioration in picture quality due to defective picture elements or pixels of the solid state image sensor means, which may. for example, comprise a charge coupled device (CCD), compensated for by signal processing, but, even when the charge accumulation time of the picture elements of the sensor means is changed, a correct defect compensating operation may be performed in such a manner as to produce an image output signal of superior picture quality.

The invention will now be further described, by way of illustrative and non-limiting example, with reference to the accompanying drawings, in which:
Figure 1 is a block diagram of a video camera embodying the invention;
Figures 2A and 2B are diagrammatic views of a CCD image sensor forming an image pickup unit of the video camera shown in Figure 1;
Figure 3 is a diagrammatic view illustrating pixel defects and an image pickup output of the CCD image sensor shown in Figure 2:
Figure 4, which is constituted by Figures 4(a) and 4(b) when relatively positioned as shown by the inset on the sheet containing Figure 4(b), shows a memory map of a memory for storing data concerning the pixel defects of the CCD image sensor;
Figure 5 is a block diagram of a compensating signal generator circuit for reading compensating data from the memory for forming various compensation signals, and peripheral circuits;
Figure 6 is a timing chart showing a controlling operation performed by the compensating signal generator circuit for saving power consumption in the memory;
Figure 7 is a waveform diagram illustrating a defect compensating operation making use of the compensating signals formed by the compensating signal generator circuit; and
Figure 8 is a waveform diagram illustrating a relationship between charge accumulation time and accumulated charges for field and frame readout modes of the CCD image sensor.

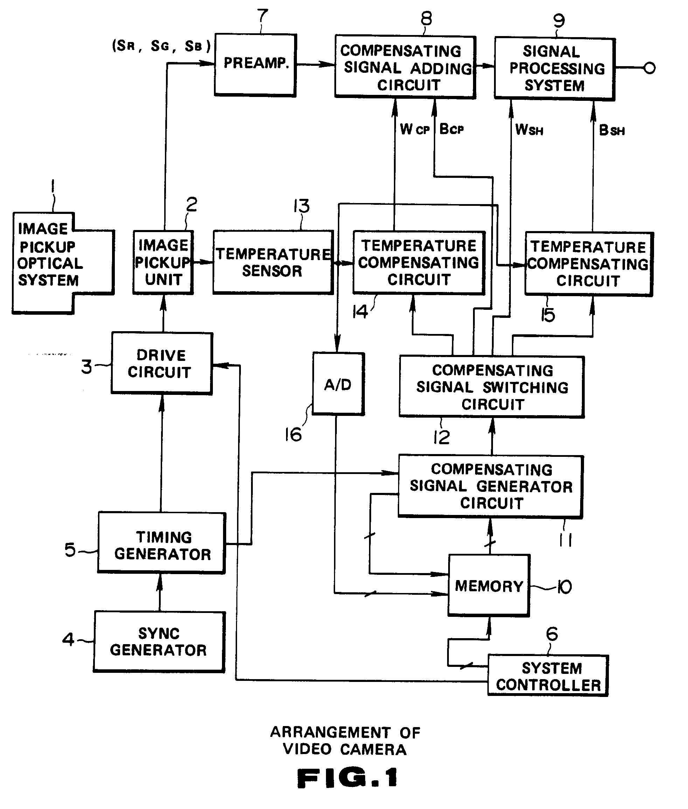

Figure 1 is a block diagram of a colour video camera embodying the invention in which colour image pickup is achieved at a three-plate type image pickup unit 2 constituted by three solid-state image sensors in the form of separate plates, on image pick-up surfaces of which are formed images of a scene derived from picked up image light colour-separated by an image pickup unit 1 into three primary colours, namely red (R), green (G) and blue (B).

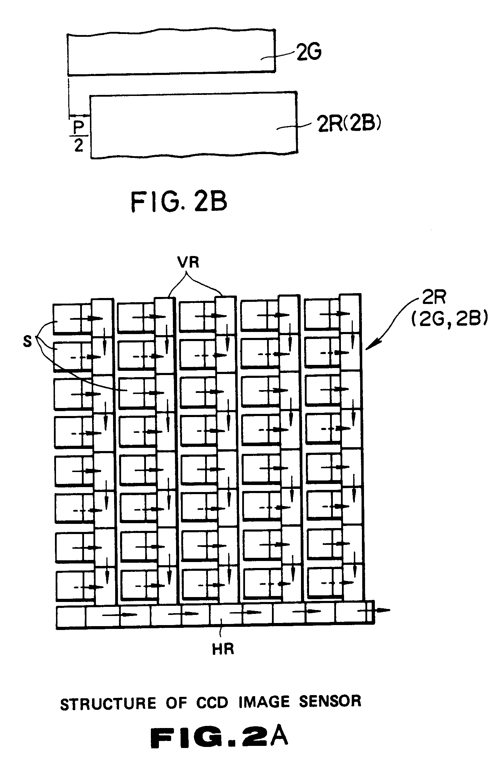

In this embodiment, the solid-state image sensors constituting the image pickup unit 2 are, for example, formed, as shown in Figure 2A, by a large number of light-receiving sections S each associated with one of a plurality of pixels arranged in a matrix, vertical transfer registers VR provided along vertical directions on one side of the light receiving sections S, and a horizontal transfer register HR provided at terminal ends of the vertical transfer registers VR. Three interline transfer type CCD image sensors 2R, 2G and 2B are used, in each of which signal charges corresponding to the light intensities received at each of the sections S are transferred to associated vertical transfer registers VR corresponding to associated vertical lines at intervals of one field period or one frame period, and the signal charges are then transferred through the vertical transfer registers VR to the horizontal transfer register HR, from which the signal charges for each horizontal line are taken out as an image pickup output. As shown in Figure 2B, the image pickup unit 2 is arranged and constructed in accordance with a spatial pixel shift system in such a manner that the CCD image sensor 2G for picking up the image of the green (G) component of the scene is shifted by 1/2 pixel pitch (P/2) in the horizontal direction with respect to the other two CCD image sensors 2R and 2B for picking up the images of the field of the red (R) and blue (B) components, respectively.

A drive circuit 3 for the image pickup unit 2 receives from a timing generator 5 a horizontal transfer pulse signal 0̸H and a vertical transfer pulse signal 0̸v synchronised with sync signals SYNC produced by a sync generator 4. A system controller 6 transmits to the drive circuit 3: a read mode designating signal designating a field read mode for reading the signal charges corresponding to the amount of received light obtained at each of the light receiving sections S of the CCD image sensors 2R, 2G and 2B, in their entirety, during one field period, and a frame read mode designating a frame read mode for reading the signal charges obtained at the light receiving sections S in their entirety during one frame period; and a shutter control signal for controlling the charge accumulating time for the CCD image sensors to control the shutter speed of a so-called electronic shutter.

In the CCD image sensors 2R, 2G and 2B of the image pickup unit 2, the frame readout mode has a charge accumulation time of 1/30 of a second and the field read mode has a charge accumulation time of 1/60 of a second, namely half that for the frame read mode. Accordingly, in the field read mode, the signal charges obtained at two vertically adjoining light receiving sections S are summed together before being read so as to provide the same sensitivity as that during the frame read mode.

Colour image pickup outputs SR, SG and SB obtained at the image pickup unit 2 constituted by the three CCD image sensors 2R, 2G and 2B are supplied through a preamplifier 7 and a compensating signal adding circuit 8 to a signal processing system 9. The pickup outputs SR, SG and SB are subjected to defect compensation in the adding circuit 8 and to processing including gamma or shading compensation in the processing system 9, so as to be then outputted after conversion into video signals conforming to a standard television system prescribed by the CCIR or EIA.

In this embodiment, the CCD image sensors 2R, 2G and 2B are previously subjected to defect tests analysing the location of defective pixels, and the kind of as well as the level of the defects, data corresponding thereto being stored in a memory 10 as compensating data. White flaw defect compensation signals WCP, black flaw defect compensation signals BCP, white shading compensation signals WSH and black shading compensation signals BSH are formed at the timing of the output signals of the defective pixels of the CCD image sensors 2R, 2G and 2B, on the basis of the compensation data read from the memory 10, by a compensating signal generator circuit 11. The compensation signals WCP, BCP, WSH and BSH are supplied through a compensating signal switching circuit 12 to the compensating signal adding circuit 8 and to the signal processing system 9 for compensating for image defects in the compensating signal adding circuit 8 and the signal processing system 9.

The image pickup unit 2 is provided with a temperature sensor 13 for sensing the temperatures of the CCD image sensors 2R, 2G and 2B so that the compensating signals WCP and BSH for the white flaws and black shading, the defect level of which exhibits temperature dependency, will be compensated for temperature in temperature compensating circuits 14 and 15 on the basis of the detection output of the temperature sensor 13. The temperatures of the CCD image sensors 2R, 2G and 2B, as indicated by the detection output of the temperature sensor 13, are digitised in an analog to digital (A/D) converter 16 so as to be then transmitted as address data to the memory 10.

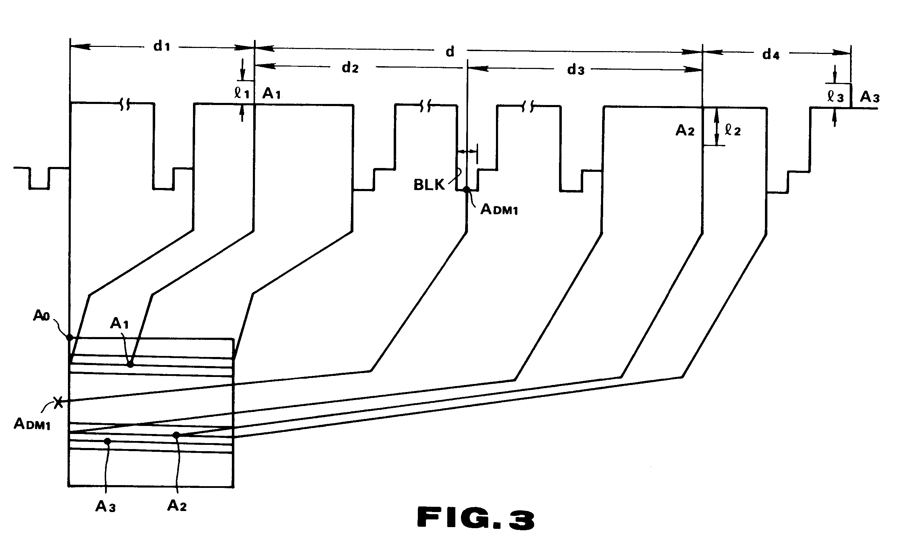

The defect tests of the CCD image sensors 2R, 2G and 2B are carried out at a test temperature which is higher than the ambient temperature at which the image defects are expected to take place frequently. The defect tests are carried out in such a manner that the locations A1, A2, ... of the white and black flaw defect pixels of the CCD image sensors 2R, 2G and 2B are identified, the kinds and the levels l1, l2, ... of the defects are detected, and the positional data of the defective pixels are obtained in the following way. That is, referring to Figure 3, the first defect pixel position A1, counting from a reference point A0, is represented by digital data of a predetermined number of bits corresponding to the distance d1 from the reference point A0 to an encoded form. The position An of another given defective pixel, where n is any arbitrary integer, is represented by digital data of a predetermined number of bits corresponding to the distance dn from the preceding defective pixel position A(n-1). When the relative distance between any arbitrary defective pixel and the next defective pixel is so long that it cannot be represented by digital data of the predetermined number of bits, as in the case of a dummy pixel position ADM1 between a first defective pixel position A1 and a second defective pixel position A2 having a relative distance d as shown for example in Figure 3, a dummy defective pixel is set between these defective pixels so that the relative distance d is divided into a distance d2 from the first defective pixel position A1 to the dummy defective pixel position ADM1 and a distance d3 from the dummy defective pixel position ADM1 to the second defective pixel position A2, the distances d2 and d3 being represented by digital data having respective predetermined number of bits.

If the positions A1, A2, ... of the defective pixels of the CCD image sensors 2R, 2G and 2B are represented by two-dimensional absolute addresses, 10 data bits each along the horizontal direction and along the vertical direction, a total of 20 data bits are needed for the address data. However, if the defective pixel position An, where n is any arbitrary integer, is represented by the encoded digital data of a predetermined number of bits corresponding to the distance dn from the immediately preceding defective pixel position A(n-1) in accordance with a relative address system, the address data can be compressed to the number of bits necessary to represent the maximum value of the relative address. For example, for relative address data of 12 bits, data compression of 8 bits may be achieved for one defective pixel position. Assuming that the relative distance that can be represented by the 12-bit relative address data is 4.5 lines, for example when the relative distance dn from a given defective pixel position An to the next defective pixel position A(n+1) is not less than 4.5 lines, one or more dummy defective pixel positions ADM may be set between the defective pixel positions An and A(n+1), so that the relative distance dn is divided and reduced to not more than 4.5 lines, such that the defective pixel position A(n+1) is represented by 12 bits of the relative address data. In this manner, when the relative distance dn between a given defective pixel position An and the next pixel position A(n+1) is so long than it cannot be represented by the digital data of the predetermined number of bits, one or more dummy defective pixels may be set between the defective pixels for dividing the relative distance dn in such a manner that the totality of the defective pixel positions can be represented by the digital data of the predetermined number of bits. It is to be noted that the image pickup output signals are not affected in quality by the dummy defective pixel positions ADM1 by setting the dummy defective pixel positions so as to lie within the blanking period BLK of the image pickup output signals read out from the CCD image sensors 2R, 2G and 2B.

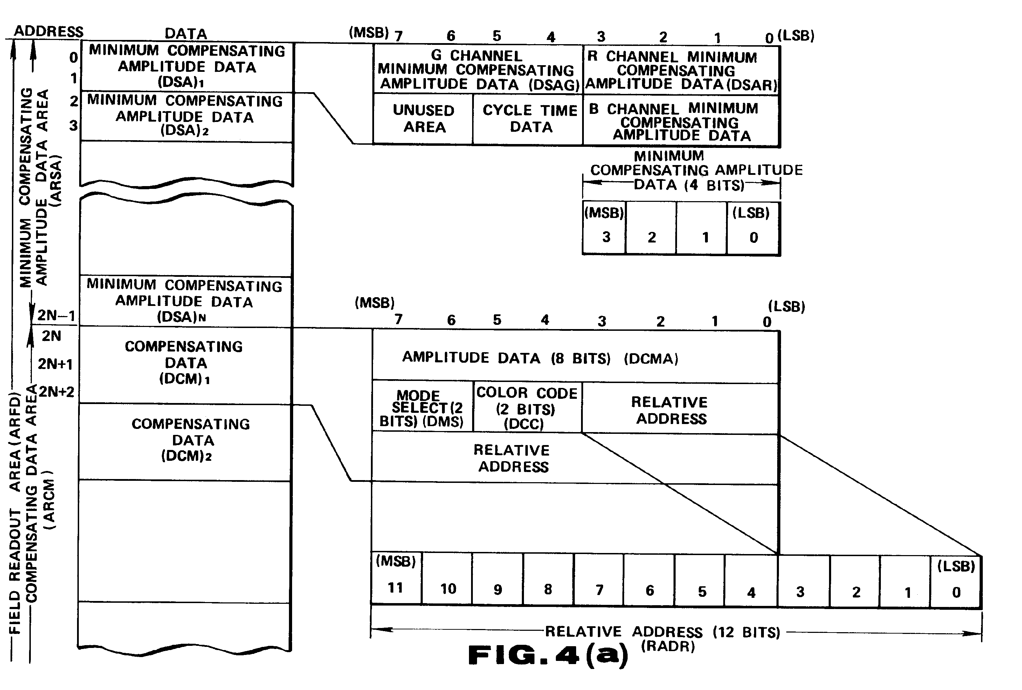

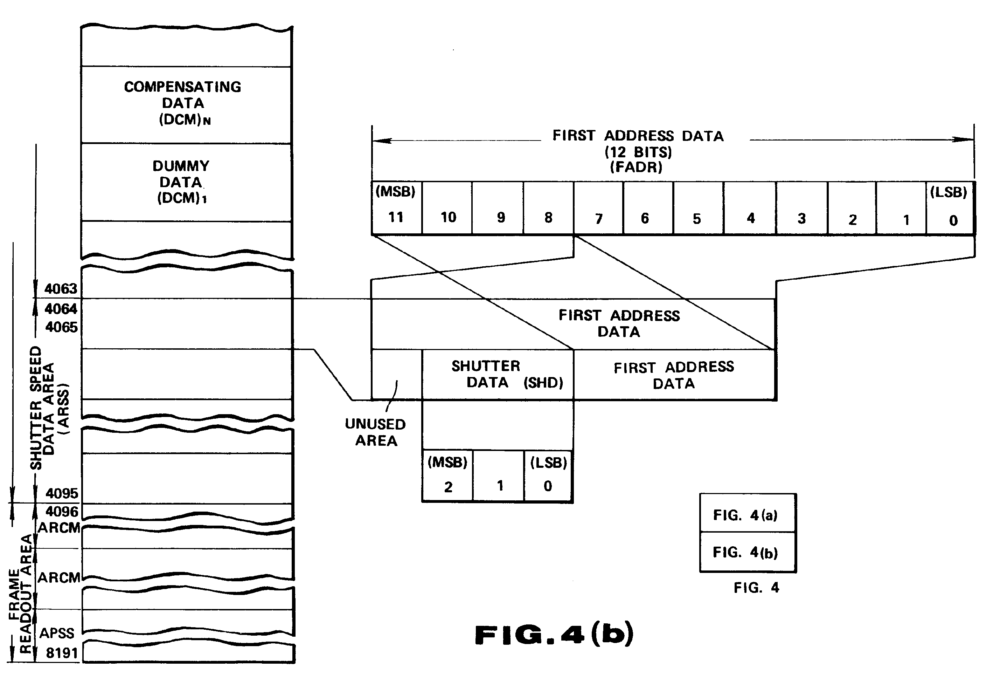

In this embodiment, the memory 10 is divided into a field readout area ARFD from an address 0 to an address 4095 and a frame readout area ARFM from an address 4096 to an address 8191, as shown in the memory map of Figure 4. Each of the readout areas ARFD and ARFM is divided into a minimum compensating amplitude data area ARSA, a compensating data area ARCM and a shutter speed data area ARSS.

In the minimum compensating amplitude data area ARSA, there are written a number N of minimum compensating amplitude data DSA indicating the minimum amplitude at which it is necessary to perform compensation, in dependence upon the image pickup conditions, such as the temperatures and the shutter speed, on the image pickup outputs of the CCD image sensors 2R, 2G and 2B. The minimum amplitude data DSA is formed by 2-byte data, of which 4 bits are allotted to each of the minimum compensating channel amplitude data DSAR, DSAG, and DSAB for the R, G and B channels, 2 bits are allotted to cycle time data and the remaining 2 bits are unused.

In the data area ARCM, there are written data DCM obtained from the above-described defect tests conducted on the CCD image sensors 2R, 2G and 2B. The data DCM are made up of 8-bit amplitude data DCMA associated with the defect level, 2-bit mode select data DMS indicating the kind of defect, 2-bit colour code data DCC indicating the channel to be compensated, and 3-byte data formed by the 12-bit relative address data RADR indicating the distance to the next defect pixel position. The data DCM include data DCM′ concerning the dummy defective pixels.

In the shutter speed data area ARSS, there are written 15 2-byte data each composed of shutter data SHD for converting 4-bit shutter speed data indicating the present shutter speed of the electronic shutter into 3-bit data and 12-bit first address data FADR indicating the start address of the above data area ARCM, that is the address 2N.

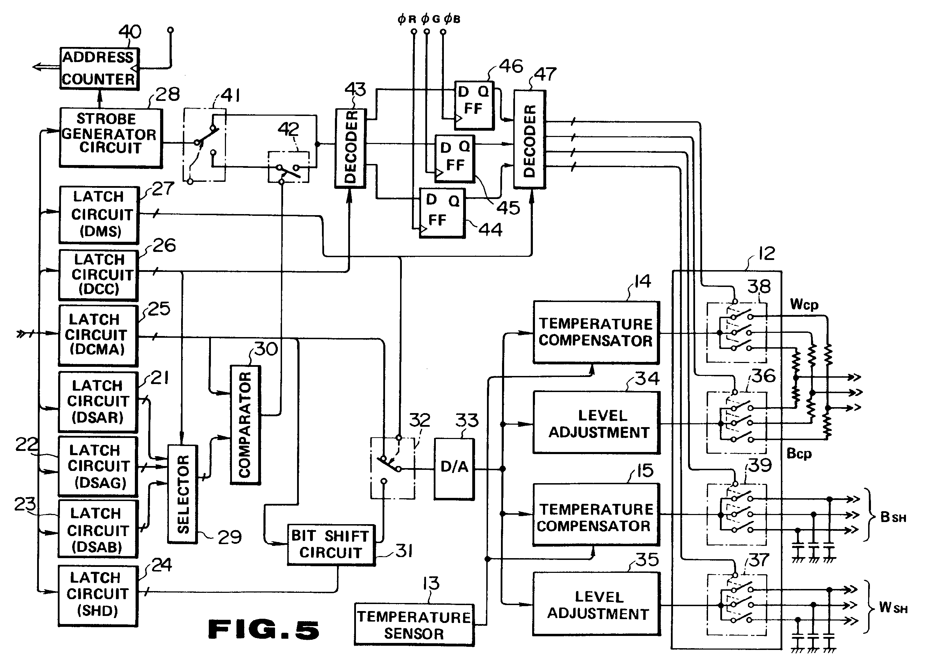

In this embodiment, the compensating signal generator circuit 11 comprises first to seventh latch circuits 21 to 27, to which various data read out from the memory 10 are supplied, and a strobe generator circuit 28. The circuits 21 to 28 are shown in Figure 5, which shows an example of the compensating signal generator circuit 11, together with peripheral circuits for the circuit 11.

When performing the image pickup operation at the operating mode preset in the system controller, the compensating signal generator circuit 11 performs an initialising operation during the blanking periods at a one field or one frame interval in such a manner that, depending upon the image pick-up conditions, such as the shutter speed preset in the system controller 6 or the temperature data transmitted from the temperature sensor 13 by way of the A/D converter 16, the minimum amplitude data DSAR, DSAG and DSAB for the R, G and B channels read out from the minimum amplitude data area ARSA of the memory 10 are latched in the first to third latch circuits 21, 22 and 23 and the shutter data SHD read out from the shutter speed data area ARSS of the memory 10 are latched in the fourth latch circuit 24. The generator circuit 11 also operates, on the basis of the first address data FADR read out from the shutter speed data area ARSS, in such a fashion that the strobe generator circuit 28 causes an address counter 40 to read out data DCM1 from the leading address in the data area ARCM of the memory 10, that is the address 2N and the relative address data RADR indicating the distance from the point of origin A0 to the first defective pixel position A1 is latched in the strobe generator circuit 28 while the amplitude data DCMA, colour code data DCC and the mode select data DMS are latched in the fifth to seventh latch circuits 25 to 27.

When the strobe generator 28 terminates the above-described initialising operation and proceeds to the compensating operation, the strobe generator circuit 28 outputs a strobe pulse at the timing of the first defective pixel position on the basis of the relative address data RADR latched in the course of the initialising operation to increment the address counter 40 to read out the next data DCM2 from the data area ARCM of the memory 10 to latch the relative address data indicating the distance to the next defective pixel position A1 in the strobe generator 28, as well as to latch the amplitude data DCMA, colour code data DCC and mode select data DMS in the fifth to seventh latch circuits 25 to 27 and to output the strobe pulses sequentially at the timing of the respective defective pixel positions An.

The first to third latch circuits 21 to 23 latch the minimum amplitude data DSAR, DSAG and DSAB of the R, G and B channels read out from the minimum amplitude data area ARSA of the memory 10, these amplitude data DSAR, DSAG and DSAB then being transmitted through a selector 29 to a comparator 30.

The fourth latch circuit 24 latches the shutter data SHD read out from the shutter speed data area ARSS of the memory 10, which shutter speed data are then transmitted to a bit shift circuit 31 as control data.

The fifth to seventh latch circuits 25, 26 and 27 are operative to latch amplitude data DCMA, colour code data DCC and mode select data DMS included in the data DCM readout from the data area ARCM of the memory 10.

The amplitude data latched in the fifth latch circuit 25 are transmitted to the comparator 30, and also to a first switching circuit 32 (both directly and through the bit shift circuit 31) and thence to a digital/analog (D/A) converter 33. The colour code data DCC latched in the sixth latch circuit 26 are supplied to the selector 29 as control data, while being simultaneously transmitted as control data to a first decoder 43 as described below. The mode select data DMS latched in the seventh circuit 27 are transmitted as control data to the first switching circuit 32, while being simultaneously transmitted as control data to a second switching circuit 41 and a second decoder 47 as described below.

The selector 29 selects that one of the minimum amplitude data DSAR, DSAG and DSAB for the R, G and B channels latched in the first to third latch circuits 21 to 23 that is designated by the colour code data DCC supplied as control data from the sixth latch circuit 26 and transmits the selected minimum amplitude data DSA to the comparator 30. The comparator 30 compares the minimum amplitude data DSA selected by the selector 29 with the amplitude data DCMA latched in the fifth latch circuit 25 and transmits a comparison output signal to a third switching circuit 42 as control data. The third switching circuit 42 is closed when the amplitude data DCMA is larger than the minimum amplitude data DSA.

Depending on the shutter data transmitted as control data from the fourth latch circuit 24, the amplitude data DCMA transmitted from the fifth latch circuit 25 is subjected to a bit shifting operation, for example as shown in Table 1, in the bit shifting circuit 31.

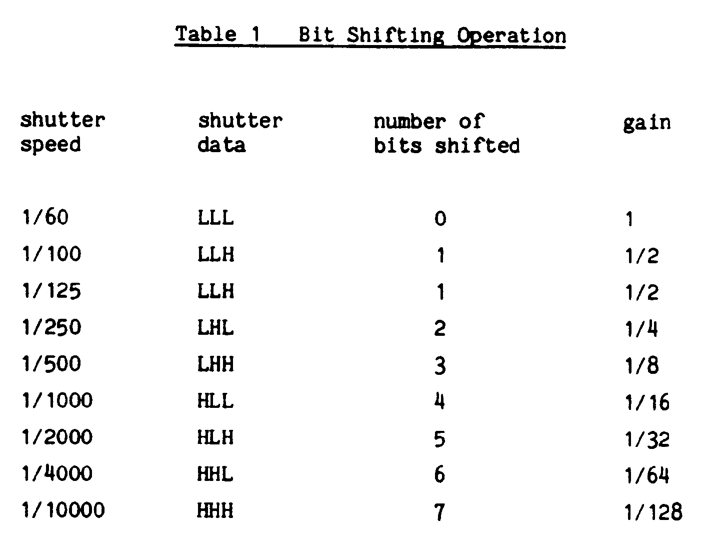

The bit-shifted amplitude data DCMA are then transmitted by way of the first switching circuit 32 to the D/A converter 34.

The first switching circuit 32 is controlled by the mode select data DMS, supplied from the seventh latch circuit 27 as control data, in such a manner as to select the bit shift circuit 31 when the mode select data DMS indicates the white flaw defect mode and to select the fifth latch circuit 25 when the mode select data indicates some other defect mode.

The amplitude data transmitted by way of the first switching circuit 32 are converted in the D/A converter 33 into corresponding analog signals. The analog amplitude signals produced by the D/A converter 33 are supplied to first and second level adjustment circuits 34 and 35 and to the first and second temperature compensating circuits 14 and 15, so as to be selectively outputted by way of first to fourth signal switching circuits 36 to 39 from the circuits 34, 35, 14 and 15 as various amplitude compensating signals.

On the basis of first address data FADR read out from the shutter speed data area ARSS of the memory 10 and the relative address data included in the data DCM read out from the data area ARCM of the memory 10, the strobe generator circuit 28 generates strobe pulses at timings associated with the defective pixel positions A1, A2, ... of the CCD image sensors 2R, 2G and 2B making up the image pickup unit 2, while simultaneously presetting the first address data and the relative address data in the address counter 40 of the memory 10.

The second switching circuit 41 is controlled by the mode select data DMS, transmitted from the seventh latch circuit 27 as control data, in such a manner as to select the third switching circuit 42 when the mode select data DMS indicates the white flaw defect mode and to select the first decoder 43 when the mode select data indicates some other defect mode. The strobe pulse of the white flaw defect mode is transmitted through the third switching circuit 42 to the first decoder 43, while the strobe pulse of some other defect mode is transmitted directly to the first decoder 43. The third switching circuit 42 is controlled by the output of the comparator 30 as control data, in such a manner that the strobe pulse of the white flaw defect mode transmitted through the second switching circuit 41 is transmitted to the first decoder 43 only when the amplitude data latched at the fifth latch circuit 25 is larger than the minimum amplitude data DSA selected at the selector 29.

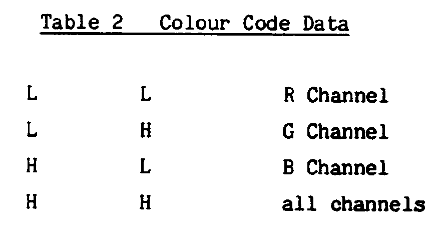

The first decoder 43 transmits the strobe pulse to the second decoder 47 through D-type flip-flops 44, 45, 46 of one or all of the R, G and B channels selectively designated as shown in Table 2 by the 2-bit colour code data DCC supplied as control data from the sixth latch circuit 26.

Clock input terminals of the D-type flip-flops 44 to 46 are supplied, from the timing generator 5, with clock pulse signals 0̸R, 0̸G and 0̸B matched to the phase of each of the R, G and B channels, that is each of the colour components of the pickup output produced by the CCD image sensors 2R, 2G and 2B, for effecting phase matching of the strobe pulse signal supplied from the first decoder 43 by the clock pulse signals 0̸R, 0̸G and 0̸B. In this embodiment, in which the image pickup unit 2 is constructed in accordance with the spatial pixel shifting system, the clock pulse signal 0̸G for the G-channel is of opposite phase to the clock pulse signals 0̸R and 0̸B of the other (R and B) channels, so as to produce a strobe pulse signal matched to the phase of each of the R, G and B signals or colour components of the image pickup output obtained at each of the CCD sensors 2R, 2G and 2B of the image pickup unit 2. The second decoder 47 forms selective control data from this strobe pulse signal in association with the modes designated as shown in Table 3 by the 2-bit mode select data DMS transmitted as control data from the seventh latch circuit 27, and transmits the selective control data to the control input terminal of each of the first to fourth switching circuits 36 to 39.

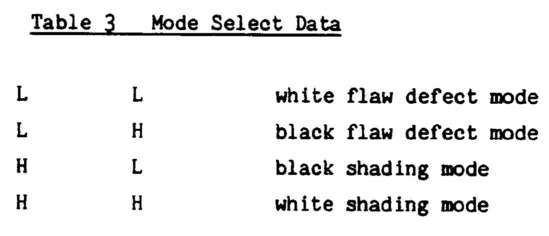

The analog amplitude signals outputted from the D/A converter 33 by way of the first or second level adjustment circuits 34, 35 or the first or second temperature compensating circuits 14, 15 are switched by the first to fourth signal switching circuits 36 to 39 in accordance with the selective control data from the second decoder 47 in the following manner, so as then to be outputted as the various compensating signals.

Thus, when the mode select data DMS is LL, thus indicating the white flaw defect mode, the third switching circuit 38 selectively outputs to one of the R, G and B channels indicated by the colour code data DCC the analog amplitude signals outputted from the D/A converter 33 through the first temperature compensating circuit 14, as the white flaw defect compensating signal WCP. When the mode select data DMS is LH, thus indicating the black flaw defect mode, the first signal switching circuit 36 selectively outputs to one of the R, G and B channels indicated by the colour code data DCC the analog amplitude signals outputted from the D/A converter 33 by way of the first level adjustment circuit 34, as the black flaw defect compensating signal BCP. When the mode select data DMS is HL, thus indicating the black shading mode, the fourth signal switching circuit 39 selectively outputs to one of the R, G and B channels indicated by the colour code data DCC the analog amplitude signals outputted from the D/A converter 33 by way of the second temperature compensating circuit 15, as the black shading compensating signal BSH. When the mode select data DMS is HH, thus indicating the white shading mode, the second signal switching circuit 37 selectively outputs to one of the R, G and B channels indicated by the colour code data DCC the analog amplitude signal outputted from the D/A converter 33 through the second level adjustment circuit 35, as the white shading compensating signal WSH.

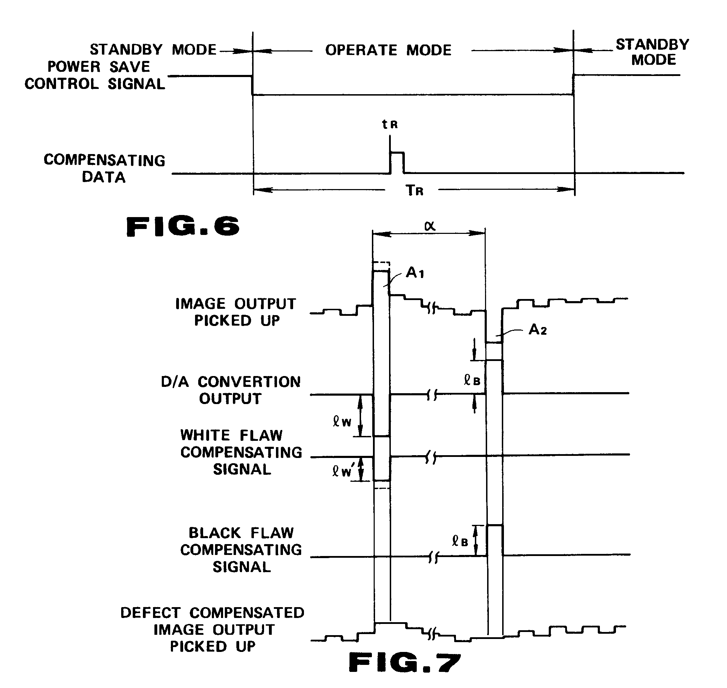

In this embodiment, when the data DCM are read out from the data area ARCM of the memory 10 for forming the compensating signals WCP, BCP, WSH and BSH, as described above, the power supplied to the memory 10 is cut off or reduced, for power saving, except during a period or interval TR (Figure 6) of several tens of clock periods before and after the read-out timing for the signal charges from each of the defective pixels of the CCD image sensors 2R, 2G and 2B making up the image pickup unit 2, that is a read-out timing tR of the data DCM. This previous wasteful power consumption by the memory 10 so as to realise power saving.

In this embodiment, the white flaw defect compensating signal WCP and the black flaw defect compensating signal BCP, obtained upon selective switching of the analog amplitude signal outputted from the D/A converter 33 by the first and third switching circuits 36, 38 of the compensation signal switching circuit 12 at the timing of the defective pixel positions A1, A2, ... in dependence upon the defect mode, and the decoded output of the second decoder 47 receiving the phase-matched strobe pulse signals at the D-type flip-flops 44 to 46 as selective control data, are summed at the compensating signal adding circuit 8 in such a manner that the colour image pickup outputs SR, SG and SB of the R, G and B channels obtained at the image pickup unit 2, arranged in accordance with the spatial pixel shifting system, are subjected to a compensating operation for the image defects due to white and black flaw defects.

The white flaw defect compensating signal WCP selected by the first compensating signal switching circuit 36 is summed at the compensating signal adding circuit 8 with the image pickup output obtained at the image pickup unit 2, after the amplitude lW of the analog amplitude signal supplied from the D/A converter 33 has undergone temperature compensation in the first temperature compensating circuit 14, to which is supplied the detection output of the temperature sensor 13 for detecting the temperature of each of the CCD image sensors 2R, 2G and 2B of the image pickup unit 2, as shown in Figure 7, whereby the amplitude is set to a new amplitude lW′ for optimum adjustment of the white flaw defect at the working temperature under the actual image pickup state, in such a manner as to perform an optimum adjustment of the white flaw defect exhibiting temperature dependency.

The defect level of the white flaw defect exhibiting temperature dependency is extremely small at ambient temperature and may be safely disregarded as a defect, while it increases exponentially with an increase in temperature. Therefore, should there be a compensation error in the first temperature compensating circuit 14, which performs temperature compensation of the white flaw defect compensating signal WCP, the white flaw defect is over-compensated or under-compensated by the white flaw defect compensation signal WCP, so that a so-called compensation flaw remains in the image pickup output obtained after defect compensation. Thus, in this embodiment, the minimum amplitude data DSA read out from the minimum amplitude data area ARSA of the memory 10 are latched in the first to third latch circuits 21 to 23 of the compensating signal generator circuit 11 in the course of the initialising operation, with the data such as the shutter speed or the operating temperature as the address data, in such a manner that compensation is not performed in the case of a white flaw defect having a low defect level (when the amplitude data DCMA read out from the data area ARCM of the memory 10 in the course of the actual image pickup operation is less then the minimum amplitude data DSA), in which event the problem of compensation flaw caused by white flaw defect compensation is most likely to occur, and only white flaw defects having a higher defect level are selectively compensated in order to provide for a more effective white flaw defect compensating operation.

When the electronic shutter function provided by controlling the charge accumulating time is incorporated for each of the CCD image sensors 2R, 2G and 2B making up the image pickup unit 2, the signal level of the white flaw defect signal contained in the image pickup output is changed in dependence upon the charge accumulation time, that is the shutter speed. In this embodiment, the amplitude data DCMA are subjected to the above-described bit shifting operation shown in Table 1 by the bit shift circuit 31 in the course of the image pickup operation on the basis of the shutter data latched in the fourth latch circuit 24 of the compensating signal generator circuit 11 in the course of the initialising operation, in such a manner that the preset shutter speed is associated with the gain of the white flaw defect compensating signal WCP to provide for an optimum white flaw defect compensating operation at all times. It is to be noted that, for associating the preset shutter speed with the gain of the white flaw compensating signal WCP, it is also possible to provide, instead of the bit shift circuit 31, a multiplication unit for performing a digital or analog multiplication of the white flaw defect compensating signal WCP by the shutter speed or the charge accumulation time as the multiplication factor.

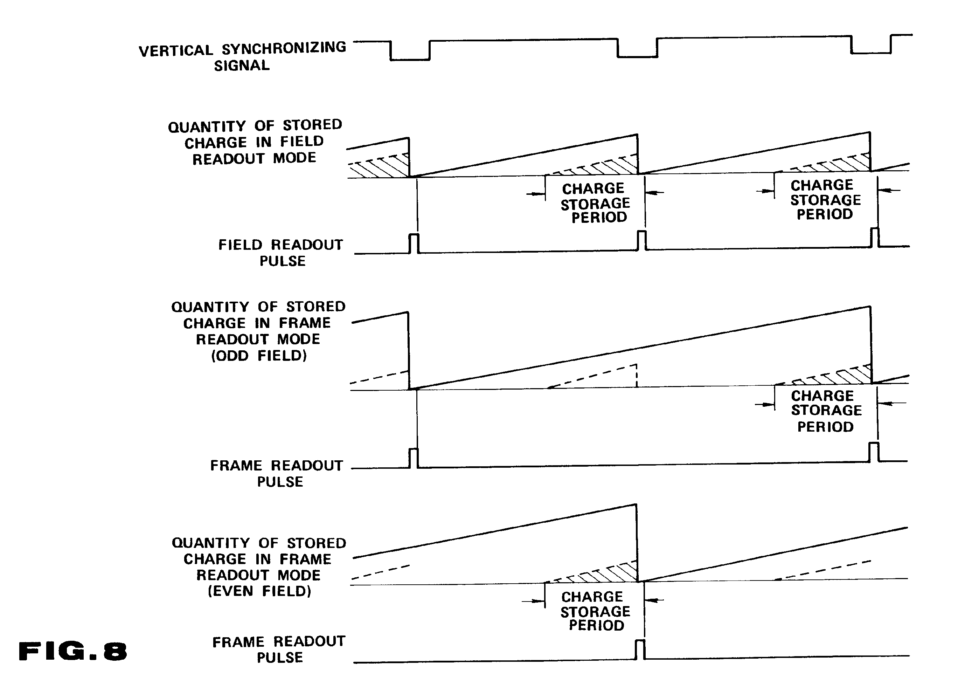

In addition, in cases in which the electronic shutter function is incorporated in the CCD image sensors 2R, 2G and 2B of the image pickup unit 2, should the charge accumulation time for the field readout mode be reduced to one half, as shown for example in Figure 8, the signal charges produced are also reduced to one half of those for the normal mode. However, for the frame readout mode, the effective charge accumulation time is reduced to one quarter of that for the normal mode. Thus, the signal level of the white flaw defect signal contained in the image pickup output will differ even when the shutter speed is preset to the same value, since the effective charge accumulation time will differ depending on the selected signal charge readout mode. In this embodiment, the field readout area ARFD and the frame readout area ARFM are provided in the memory 10 where the minimum amplitude data DSA, data DCM or the shutter data SHD for these readout modes are written previously. Data are read out from one of the field readout area ARFD and the frame readout area ARFM corresponding to the actually selected readout mode to perform the above-described initialising operation and compensating operation to provide for optimum defect compensation for any of the readout modes.

Also, in this embodiment, the image pickup output, compensated for image defects due to white and black flaw defects as described above, is subjected to shading compensation using black shading compensating signals BSH and white shading compensating signals WSH obtained upon selectively switching analog signals outputted from the D/A converter 33, as a function of the kind of the defect mode, by the second and fourth switching circuits 36 and 38 of the compensating signal switching circuit 12, under control of the signal processing system 9.

The amplitude of the analog amplitude signal outputted by the D/A converter 33 is subjected to temperature compensation by the second temperature compensating circuit 15 to which the sensed output of the temperature sensor 13 is supplied, so that the black shading can be compensated to a minimum value at the operating temperature under the actual image pickup operating conditions with the aid of the black shading compensating signal BSH selected by the fourth signal switching circuit 39.

Thus, in this embodiment, the amplitude data included in the compensation data DCM read out from the memory 10 are selectively subjected to the above-described bit shifting operation, and the analog amplitude signals obtained by converting the amplitude data DCMA into analog form are selected by subjection to a temperature compensating operation. Then, using, as timing information, the control data obtained by decoding the strobe pulse signal formed on the basis of the relative address data RADR by the colour code data DCC or the mode select data DMS, the analog amplitude signals are switched by the signal switching circuit 12. In this manner, defect compensation signals, matched in phase to the image pickup outputs from the CCD image sensors 2R, 2G and 2B constituting the image pickup unit 2 and arranged and constructed in accordance with the spatial pixel shifting system, are formed and used to effect an optimum compensation of image defects due to white or black flaw defects of the CCD image sensors 2R, 2G and 2B, so that image pickup output signals having an extremely high picture quality are provided.

As will be appreciated from the foregoing description, the above-described embodiment of the invention has the following advantageous features.
It provides a solid-state image pickup apparatus in which, in view of the above-described various inconveniences of the previously proposed solid state image pickup apparatus, the degraded picture quality ascribable to the image pickup output from defective pixels included in the solid state image pickup device, such as CCD devices, formed by semiconductor material, is compensated for by signal processing, in such a manner as to produce image pickup output signals having a superior picture quality.
Timing information representing the defective pixel positions and amplitude information representing the level of defective components in the solid-state image pickup devices constituting the image pickup unit are separately processed by a double route processing system to form defect compensation signals, whereby the defect compensating operation may be performed positively so that changes in the various defect levels may be taken into account.
Both image defects due to white flaw defect pixels having temperature dependency and the image defects due to black flaw defect pixels not having temperature dependency are compensated, in such a manner as to produce image pickup output signals having a superior picture quality.
Even when the mode of reading out signal charges from the solid state image pickup devices constituting the image pickup unit is switched by a switching operation, defect compensation signals associated with the various operating modes can be formed in a simple manner to allow for a positive defect compensating processing of the solid-state image pickup devices.
The charge accumulation time in each pixel can be preset variably, whereby, even when the charge accumulation time in the solid state image pickup devices is changed, a correct defect compensating operation may be performed in such a manner as to produce image output signals having a superior picture quality.
The positions of defective pixels included in the solid state image pickup devices are indicated efficiently by position data formed by a smaller number of bits to simplify the construction of the memory means and the peripheral circuits to allow for an efficient compensating operation of image defects so as to provide image pickup output signals having a superior picture quality.
The relative distance between the defective pixels in an encoded form is used as the position data for the defective pixels included in the solid state image pickup devices, and, in the case of a larger relative distance between defective pixels, a dummy defective pixel is set in such a manner as to locate the defective pixels efficiently.
Wasteful power consumption in the memory storing the data concerning the locations of the defective pixels included in the solid state image pickup devices and the levels of the defective components included in the output signals from these defective pixels is eliminated so as to lower the power consumption of the overall apparatus without obstructing the compensating operation. In the case of defects having a defect level so low that the compensation flaw remaining after the disappearance of a small defect would be objectionable, the compensating operation is not carried out. Only flaw defects having a high defect level are selectively compensated so as to prevent the picture quality from being degraded by over-compensation or under-compensation, in such a manner as to provide image pickup output signals having a superior picture quality.
The positions of generation of the defect compensation signals for the image pickup outputs obtained at the solid state image pickup devices of the image pickup unit constructed in accordance with the so-called spatial pixel shifting system are separately variably to allow for a positive defect compensating operation.

## Claims

1. A solid state television camera comprising:
solid state image sensor means (2) of semiconductor material for providing an output signal corresponding to an image of an object, the image sensor means including picture elements (S) arranged in a raster having parallel scanning lines which are, in turn, arranged in order in a direction orthogonal to the direction of said scanning lines, said semiconductor material having crystal defects at locations of a plurality of said picture elements which will create noise at corresponding times in said output signal;
memory means (10) for memorising position data corresponding to the positions of said crystal defects in the semiconductor material and defect level data corresponding to the level of a compensating signal for compensating the output signal associated with each of said defect locations;
readout means for reading out said position data and said defect level data from the memory means (10);
temperature sensing means (13) for sensing the temperature around the solid state image sensor means (2);
compensating signal generating means (11) connected to be supplied with said position data and defect level data and operative to generate the compensating signal at the timing at which said crystal defect is scanned and having a level which is determined by temperature compensated defect level data compensated by the output of the temperature sensing means (13); and
control means (8, 9) responsive to said compensating signal for cancelling said noise from said output signal of the image sensor means (2);
characterised in that:
said defect level data stored in said memory means (10) has been measured at a higher temperature than a normal operating temperature;
the charge accumulation time in each picture element of the image sensor means (2) can be variably set; and
the compensating signal generating means (11) is operative to form signal level defect compensating signals in association with a preset charge accumulating time on the basis of data read out from the memory means (10) and to effect defect compensation of output signals from the solid state image sensor means (2) by defect compensating signals, the signal level of which is controlled in dependence upon the charge accumulation time in each picture element of the image sensor means (2).

2. A camera according to claim 1, wherein said compensating signal generating means (11) includes a two-series signal processing system operative to separately process timing information indicating the positions of defective picture elements in the semiconductor material forming the image sensor means (2) and amplitude information indicating the level of defective components included in the output signals, said amplitude information being sampled in analog form by said timing information for generating defect compensating signals.

3. A camera according to claim 1, comprising means for discerning, on the basis of data read out from the memory means (10), mode codes of defective picture elements corresponding to the defect compensating signals formed by the compensating signal generating means (11), the memory means (10) having previously stored therein mode codes indicating the locations of white and black flaw defect picture elements in the semiconductor material forming the image sensor means (2), the levels of the white and black flaw defect components contained in the output signals thereof, and the kinds of the defective picture elements, the compensating signal generating means (11) being operative to form defect compensating signals on the basis of said discerning means and as a function of the mode codes of the defective picture elements, and said defect compensating signal having been selectively temperature-compensated by the output of said temperature sensing means (13).

4. A camera according to claim 1, wherein:
a signal charge readout mode of the solid state image sensor means (2) can be switched between a first readout mode for reading out the signal charges of the totality of the picture elements in the course of approximately one field period and a second readout mode for reading out the signal charges of the totality of the picture elements in the course of approximately one frame period;
defective picture element data in said first and second readout modes is previously stored in the memory means (10); and
the readout means is operative selectively to read from the memory means (10) defective picture element data associated with the readout mode of signal charges from the solid state image sensor means (2).

5. A camera according to claim 1, wherein the distance between a defect position An (except a first defect position A0 counting as a reference point), where n stands for any arbitrary integer, and a defect position A(n-1) immediately preceding the defect position An is encoded and stored in the memory means (10) as the position data of defective picture elements in the semiconductor material forming the image sensor means (2), and wherein, in case of a large distance between said arbitrary defective picture element and the next adjacent defective picture element, a dummy defective picture element is set between said defective picture elements and corresponding data are stored in the memory means (10).

6. A camera according to claim 1, wherein said readout means causes the memory means (10) to operate only for a predetermined period including the time duration during which data necessary for forming defect compensating signals in the compensating signal generating means (11) are read out from the memory means (10), with some time allowance before and after said time duration, the memory means (10) being controlled to remain inoperative during other periods.

7. A camera according to claim 1, comprising comparator means for comparing the signal level of the defect compensating signal generated by the compensating signal generating means (11) with a reference signal level which changes with the image pickup conditions, defect compensating signals of a signal level greater than the reference signal level being taken out on the basis of the output of said comparator means for performing defect compensation.

8. A camera according to claim 1, wherein:
the image sensor means (2) of semiconductor material comprises first to third solid state image pickup elements (2R, 2G, 2B), the first solid state image pickup element (2R) being displaced by one half of a picture element pitch (P) in the horizontal direction with respect to the second and third solid state image pickup elements (2G, 2B);
the memory means (10) stores data concerning the positions of the defective picture elements in the first to third solid state image pickup elements (2R, 2G, 2B) and the levels of the defective components included in the output signals;
the compensating signal generating means (11) is operative to separately form defect compensating signals for the first to third solid state image pickup elements (2R, 2G, 2B) on the basis of data read out from the memory means (10), and to separately adjust the locations of generation of said defect compensating signals; and
the compensating signal generating means (11) is operative to generate defect compensating signals for the solid state image pickup elements (2R, 2G, 2B) at the timing of output signals of said defective picture elements of the first to third solid state image pickup elements and to add the defect compensating signals to the output signals of the first to third solid state image pickup elements for compensating for the defects.

## Patentansprüche

1. Festkörper-Fernsehcamera mit
einer Festkörper-Bildsensoreinrichtung (2) aus einem Halbleitermaterial zum Bereitstellen eines Ausgangssignals, das einem Bild eines Gegenstands entspricht, wobei die Bildsensoreinrichtung Bildsensorelemente (S) aufweist, die in einem Raster angeordnet sind, das parallele Abtastzeilen aufweist, die wiederum in einer Reihenfolge in einer orthogonalen Richtung zur Richtung der Abtastzeilen angeordnet sind, wobei das Halbleitermaterial Störstellen an Stellen von mehreren Bildelementen aufweist, die ein Rauschen zu entsprechenden Zeiten im Ausgangssignal erzeugen werden;
einer Speichereinrichtung (10) zum Speichern von Positionsdaten, die den Positionen der Störstellen im Halbleitermaterial entsprechen, und von Fehlerpegeldaten, die dem Pegel eines Kompensationssignals zum Kompensieren des Ausgangssignals entsprechen, die mit jeder der Fehlerlagen in Verbindung stehen;
einer Leseeinrichtung zum Lesen der Positionsdaten und der Fehlerpegeldaten aus der Speichereinrichtung (10);
einer Temperaturabtasteinrichtung (13) zum Abtasten der Temperatur im Bereich der Festkörperbildsensoreinrichtung (2);
einer Kompensationssignalerzeugungseinrichtung (11), die so geschaltet ist, daß sie mit den Positionsdaten und den Fehlerpegeldaten beliefert wird, und die das Kompensationssignal mit einem Zeittakt erzeugen kann, mit dem die Störstelle abgetastet wird, und die einen Pegel aufweisen, der durch temperaturkompensierte Fehlerpegeldaten bestimmt wird, die durch das Ausgangssignal der Temperaturabtasteinrichtung (13) kompensiert sind;
einer Steuereinrichtung (8, 9), die in Abhängigkeit vom Kompensationssignal das Rauschen vom Ausgangssignal der Bildsensoreinrichtung (2) unterdrückt;
dadurch gekennzeichnet, daß
die Fehlerpegeldaten, die in der Speichereinrichtung (10) gespeichert sind, mit einer höheren Temperatur als mit der normalen Betriebstemperatur gemessen wurden;
die Ladungszeit in jedem Bildelement der Bildsensoreinrichtung (2) variabel eingestellt werden kann; und
die Kompensationssignalerzeugungseinrichtung (11) Signalpegelfehlerkompensationssignale in Verbindung mit einer voreingestellten Ladungszeit auf der Grundlage von Daten bilden kann, die aus der Speichereinrichtung (10) gelesen werden, und eine Fehlerkompensation von Ausgangssignalen von der Festkörperbildsensoreinrichtung (2) durch Fehlerkompensationssignale durchführen kann, deren Pegel in Abhängigkeit von der Ladungszeit in jedem Bildelement der Bildsensoreinrichtung (2) gesteuert werden.

2. Camera nach Anspruch 1, wobei die Kompensationssignalerzeugungseinrichtung (11) ein zweifach-serielles Signalverarbeitungssystem aufweist, das separat eine Zeittaktinformation verarbeiten kann, das die Positionen von fehlerhaften Bildelementen im Halbleitermaterial anzeigt, die die Bildsensoreinrichtung (2) bildet, und eine Amplitudeninformation, die den Pegel von fehlerhaften Komponenten anzeigt, die in den Ausgangssignalen enthalten sind, wobei die Amplitudeninformation in analoger Form durch die Zeittaktinformation abgetastet wird, um Fehlerkompensationssignale zu erzeugen.

3. Camera nach Anspruch 1 mit Mitteln zum Erkennen auf der Basis der Daten, die aus der Speichereinrichtung (10) gelesen werden, von Modus-Codes von fehlerhaften Bildelementen, die den Fehlerkompensationssignalen entsprechen, die durch die Kompensationssignalerzeugungseinrichtung (11) gebildet werden, wobei die Speichereinrichtung (10), in der vorher Modus-Codes gespeichert sind, die Lagen der weißen und schwarzen Störstellenfehlerelemente im Halbleitermaterial, das die Bildsensoreinrichtung (2) bildet, anzeigt, die Pegel der weißen und schwarzen Fleckenfehlerkomponenten, die in diesen Ausgangssignalen enthalten sind, und die Arten der fehlerhaften Bildelemente, wobei die Kompensationssignalerzeugungseinrichtung (11) Fehlerkompensationssignale auf der Basis der Erkennungseinrichtung und als Funktion der Modus-Codes der fehlerhaften Bildelemente bilden kann, und wobei das Fehlerkompensationssignal durch das Ausgangssignal der Temperaturabtasteinrichtung (13) selektiv temperaturkompensiert worden ist.

4. Camera nach Anspruch 1, wobei
ein Signalladungslesemodus der Festkörperbildsensoreinrichtung (2) zwischen einem ersten Lesemodus zum Lesen der Signalladungen der gesamten Bildelemente im Laufe von ungefähr einer Feldperiode und einem zweiten Lesemodus zum Lesen der Signalladungen aller Bildelemente im Laufe von ungefähr einer Rahmenperiode umgeschaltet werden kann;
fehlerhafte Bildelementedaten im ersten und zweiten Lesemodus vorher in der Speichereinrichtung (10) gespeichert werden; und
die Leseeinrichtung selektiv Daten fehlerhafter Bildelemente aus der Speichereinrichtung (10) lesen kann in Verbindung mit dem Lesemodus der Signalladungen von der Festkörperbildsensoreinrichtung (2).

5. Camera nach Anspruch 1, wobei die Entfernung zwischen einer Fehlerposition An (außer einer ersten Fehlerposition A0, die als Referenzpunkt zählt), wobei n eine willkürliche ganze Zahl ist, und einer Fehlerposition A(n-1), die unmittelbar der Fehlerposition An vorhergeht, codiert und in der Speichereinrichtung (10) als die Positionsdaten von fehlerhaften Bildelementen im Halbleitermaterial, das die Bildsensoreinrichtung (2) bildet, gespeichert wird, und wobei im Fall einer großen Entfernung zwischen dem willkürlichen fehlerhaften Bildelement und dem nächstbenachbarten fehlerhaften Bildelement ein Attrappen-Fehlerbildelement zwischen den fehlerhaften Bildelementen gesetzt wird und entsprechende Daten in der Speichereinrichtung (10) gespeichert werden.

6. Camera nach Anspruch 1, wobei die Leseeinrichtung die Speichereinrichtung (10) veranlaßt, nur eine vorgegebene Zeitlang zu arbeiten, die die Zeitdauer umfaßt, während der Daten, die notwendig sind, Fehlerkompensationssignale in der Kompensationssignalerzeugungseinrichtung (11) zu bilden, aus der Speichereinrichtung (10) gelesen werden, mit einer gewissen Zeittoleranz vor und nach dieser Zeitdauer, wobei die Speichereinrichtung (10) so gesteuert wird, daß sie während anderer Perioden außer Betrieb bleibt.

7. Camera nach Anspruch 1, mit einer Komparatoreinrichtung zum Vergleichen des Signalpegels des Fehlerkompensationssignals, das durch die Kompensationssignalerzeugungseinrichtung (11) erzeugt wird, mit einem Referenzsignalpegel, der sich mit den Bildabtastbedingungen ändert, wobei Fehlerkompensationssignale eines Signalpegels, der größer als der Referenzsignalpegel ist, auf der Basis des Ausgangssignals der Komparatoreinrichtung herausgenommen werden, um eine Fehlerkompensation durchzuführen.

8. Camera nach Anspruch 1, wobei
die Bildsensoreinrichtung (2) aus einem Halbleitermaterial erste bis dritte Festkörperbildabtastelemente (2R, 2G, 2B) aufweist, wobei das erste Festkörperbildabtastelement (2R) um eine Hälfte einer Bildelementteilung (P) in der horizontalen Richtung in bezug auf das zweite und dritte Festkörperbildelement (2G, 2B) versetzt ist;
die Speichereinrichtung (10) Daten speichert, die die Lagen der fehlerhaften Bildelemente im ersten bis dritten Festkörperbildabtastelement (2R, 2G, 2B) und die Pegel der fehlerhaften Komponenten speichert, die in den Ausgangssignalen enthalten sind;
die Kompensationssignalerzeugungseinrichtung (11) separat Fehlerkompensationssignale für das erste bis dritte Festkörperbildabtastelement (2R, 2G, 2B) auf der Grundlage der Daten bilden kann, die aus der Speichereinrichtung (10) gelesen werden, und separat die Erzeugungsstellen der Fehlerkompensationssignale einstellen kann; und
die Kompensationssignalerzeugungseinrichtung (11) Fehlerkompensationssignale für die Festkörperbildabtastelemente (2R, 2G, 2B) im Zeittakt der Ausgangssignale der fehlerhaften Bildelemente der ersten bis dritten Festkörperbildabtastelemente erzeugen kann und die Fehlerkompensationssignale zu den Ausgangssignalen des ersten bis dritten Festkörperbildabtastelements addieren kann, um die Fehler zu kompensieren.

## Revendications

1. Caméra de télévision à solide, comprenant:
- des moyens formant capteur d'images (2) en matériau semiconducteur pour fournir un signal de sortie correspondant à une image d'un objet, les moyens formant capteur d'images comprenant des éléments d'image (S) disposés en trame ayant des lignes de balayage parallèles qui sont à leur tour disposés en ordre dans une direction orthogonale à la direction desdites lignes de balayage, ledit matériau semiconducteur ayant des défauts cristallins aux emplacements d'une pluralité desdits éléments d'image qui créent du bruit aux instants correspondants dans ledit signal de sortie;
- des moyens formant mémoire (10) pour mémoriser des données de position correspondant aux positions desdits défauts cristallins dans le matériau semiconducteur et des données de niveau de défauts correspondant au niveau d'un signal de compensation pour compenser le signal de sortie associé à chacun desdits emplacements de défaut;
- des moyens de lecture pour lire lesdites données de position et lesdites données de niveau de défauts dans les moyens formant mémoire (10);
- des moyens détecteurs de température (13) pour détecter la température autour des moyens formant capteur d'images à solide (2);
- des moyens générateurs de signaux de compensation (11) connectés pour recevoir lesdites données de position et lesdites données de niveau de défauts, et fonctionnant pour produire le signal de compensation à l'instant auquel ledit défaut cristallin est balayé et ayant un niveau qui est déterminé par des données de niveau de défauts compensées en température par le signal de sortie des moyens détecteurs de température (13); et
- des moyens de commande (8, 9) sensibles audit signal de compensation pour annuler ledit bruit dans ledit signal de sortie des moyens formant capteur d'images (2),
caractérisé en ce que:
- lesdites données de niveau de défaut mémorisées dans lesdits moyens formant mémoire (10) ont été obtenues par mesure à une température supérieure à la température normale de fonctionnement;
- le temps d'accumulation des charges dans chaque élément d'image des moyens formant capteur d'images (2) peut être réglé de manière variable; et
- les moyens générateurs de signaux de compensation (11) fonctionnement pour former des signaux de compensation de niveau de signal de défaut en association avec un temps d'accumulation des charge préréglé, sur la base de données lues dans les moyens formant mémoire (10) et pour effectuer la compensation de défauts des signaux de sortie des moyens formant capteur d'images à solide (2) par des signaux de compensation de défauts dont le niveau de signal est commandé en fonction du temps d'accumulation des charges dans chaque élément d'image des moyens formant capteur d'images (2).

2. Caméra selon la revendication 1, dans laquelle lesdits moyens générateurs de signaux de compensation (11) comprennent un système de traitement de signaux à deux séries fonctionnant pour traiter séparément des informations de cadencement indiquant les positions d'éléments d'image défectueux dans le matériau semiconducteur formant les moyens formant capteur d'images (2) et des informations d'amplitude indiquant le niveau de composantes défectueuses comprises dans les signaux de sortie, lesdites informations d'amplitude étant échantillonnées sous forme analogique par lesdites informations de cadencement pour produire des signaux de compensation de défauts.

3. Caméra selon la revendication 1, comprenant des moyens pour discerner, sur la base de données lues dans les moyens formant mémoire (10), des codes de modes d'éléments d'image défectueux correspondant aux signaux de compensation de défauts formés par les moyens générateurs de signaux de compensation de défauts (11), les moyens formant mémoire (10) ayant préalablement mémorisé dans ceux-ci des codes de modes indiquant les emplacements des éléments d'image défectueux à défaut de tache blanche et de tache noire dans le matériau semiconducteur formant les moyens capteurs d'images (2), les niveaux des composantes de défaut de tache blanche et de tache noire contenues dans les signaux de sortie de ceux-ci, et les types des éléments d'image défectueux, les moyens générateurs de signaux de compensation (11) fonctionnant pour former des signaux de compensation de défauts sur la base desdits moyens pour discerner et en fonction des codes de modes des éléments d'image défectueux, et ledit signal de compensation de défaut ayant été compensé en température sélectivement par le signal de sortie desdits moyens détecteurs de température (13).

4. Caméra selon la revendication 1, dans laquelle:
- un mode de lecture des charges formant signal des moyens formant capteur d'images à solide (2) peut être commuté entre un premier mode de lecture pour lire les charges formant signal de la totalité des éléments d'image au cours d'approximativement une période de trame, et un deuxième mode de lecture pour lire les charges formant signal de la totalité des éléments d'image au cours d'approximativement une période d'image individuelle;
- des données d'éléments d'image défectueux dans lesdits premier et deuxième modes de lecture sont mémorisées préalablement dans les moyens formant mémoire (10); et
- les moyens de lecture fonctionnent sélectivement pour lire dans les moyens formant mémoire (10) les données d'éléments d'image défectueux associées au mode de lecture des charges formant signal dans les moyens formant capteur d'images à solide (2).

5. Caméra selon la revendication 1, dans laquelle la distance entre une position de défaut An (sauf une position de défaut AO comptant comme point de référence), où n est un nombre entier arbitraire, et une position de défaut A(n-1) précédant immédiatement la position de défaut An est codée et mémorisée dans les moyens formant mémoire (10) comme donnée de position des éléments d'image défectueux dans le matériau semiconducteur formant les moyens capteurs d'images (2), et dans lequel, dans le cas d'une grande distance entre ledit élément d'image défectueux arbitraire et l'élément d'image défectueux voisin suivant, un élément d'image défectueux fictif est mis entre lesdits éléments d'image défectueux, et des données correspondantes sont mémorisées dans les moyens formant mémoire (10).

6. Caméra selon la revendication 1, dans laquelle lesdits moyens de lecture amènent les moyens formant mémoire (10) à fonctionner uniquement pendant une période prédéterminée incluant la durée temporelle pendant laquelle les données nécessaires pour former les signaux de compensation de défauts dans les moyens générateurs de signaux de compensation (11) sont lus dans les moyens formant mémoire (10) avec un certain intervalle de temps avant et après ladite durée temporelle, les moyens formant mémoire (10) étant commandés pour rester inopérants pendant les autres périodes.

7. Caméra selon la revendication 1, comprenant des moyens formant comparateur pour comparer le niveau de signal du signal de compensation de défaut produit par les moyens générateurs de signaux de compensation de défauts (11) à un niveau de signal de référence qui change avec les conditions de prise de vues, les signaux de compensation de défauts ayant un niveau de signal plus élevé que le niveau de signal de référence étant retenus sur la base du signal de sortie desdits moyens formant comparateur pour effectuer ladite compensation de défauts.

8. Caméra selon la revendication 1, dans laquelle:
- les moyens formant capteur d'images (2) en matériau semiconducteur comprennent des premier à troisième éléments capteurs d'images à solide (2R, 2G, 2B), le premier élément capteur d'images à solide (2R) étant déplacé de la moitié du pas (P) d'un élément d'image dans la direction horizontale par rapport aux deuxième et troisième éléments capteurs d'images à solide (2G, 2B);
- les moyens formant mémoire (10) mémorisent des données concernant les positions des éléments d'image défectueux dans les premier à troisième éléments capteurs d'images à solide (2R, 2G, 2B) et les niveaux des composantes défectueuses comprises dans les signaux de sortie;
- les moyens générateurs de signaux de compensation (11) fonctionnant pour former séparément des signaux de compensation de défauts pour les premier à troisième éléments capteurs d'images à solide (2R, 2G, 2B) sur la base de données lues dans les moyens formant mémoire (10) et pour régler séparément les emplacements de génération desdits signaux de compensation de défauts; et
- les moyens générateurs de signaux de compensation (11) fonctionnent pour produire des signaux de compensation de défauts pour les éléments capteurs d'images à solide (2R, 2G, 2B) aux instants des signaux de sortie desdits éléments d'image défectueux des premier à troisième éléments capteurs d'images à solide et pour ajouter les signaux de compensation de défauts aux signaux de sortie des premiers à troisième éléments capteurs d'images pour compenser les défauts.
